# EUROPÄISCHE PATENTSCHRIFT

(11) **EP 0 257 545 B1**
(45) Veröffentlichungstag und Bekanntmachung des Hinweises auf die Patenterteilung: **21.04.1993**
(21) Anmeldenummer: 87112039.0
(22) Anmeldetag: 20.08.1987
(51) Int. Cl.: C09J 5/06, B41M 7/00

(54) **Verfahren zum Verkleben von zu bedruckenden und/oder zu beschriftenden Papierblättern oder dgl. und Papiererzeugnis, insbesondere Einblattbrief, Formularsatz oder dgl.**
Method of bonding paper sheets or the like to be printed and/or to be written on, specifically letter-sheets, formset or the like
Procédé de collage de feuilles de papier ou analogues à imprimer et/ou à écrire et article en papier, en particulier lettre-carte, jeu de formulaires ou analogues

(30) Priorität: 22.08.1986 DE 3628471
(43) Veröffentlichungstag der Anmeldung: 02.03.1988
(73) Patentinhaber: DRESCHER GESCHÄFTSDRUCKE GMBH, D-71277 Rutesheim (DE)
(72) Erfinder: Schneider, Gerhard, Dipl.-Ing. (FH), D-7255 Rutesheim (DE); Uhlemayr, Reinhold, D-7255 Rutesheim (DE)
(74) Vertreter: Haecker, Walter

(56) Entgegenhaltungen:
- EP-A- 0 074 528
- CH-A- 282 102
- DE-A- 1 611 220
- FR-A- 2 334 620

## Beschreibung

Die Erfindung betrifft ein Verfahren nach dem Oberbegriff des Anspruches 1. Bei Verfahren dieser Art ist es bekannt, Heißkleber aus thermoplastischen Klebstoffen zu verwenden, der vor dem Beschriften, Bedrucken oder Kopieren auf das zu beschriftende Papierblatt an vorbestimmten Klebestellen aufgetragen wird. Nach dem Bedrucken, Beschriften oder dgl. wird der thermoplastische Klebstoff unter Hitze aktiviert, also plastifiziert, so daß danach unter Anwendung von Druck das Papiererzeugnis an vorbestimmten Stellen z.B. an den Rändern eines Einblattbriefes verklebt werden kann (vgl. CH-A-613 405).

Aus der EP-A-0 074 528 ist ein heißsiegelfähiges Papier sowie ein Verfahren zu seiner Herstellung bekannt, wobei zur Verminderung der Heißsiegelfähigkeit der Beschichtung neben einer ersten eine zweite thermoplastische Komponente zugegeben wird, welche erst bei höheren Temperaturen ihre Klebefähigkeit erhält. Diese Druckschrift erwähnt zwar die Möglichkeit des Aufstreuens von anorganischen oder organischen Pudern auf die Heißsiegelschicht, wie z.B. Stärke oder Karbonate, weist jedoch auf den Nachteil hin, daß dann die Siegelfähigkeit der Schicht insgesamt hierunter leidet.

Nachteilig ist bei diesem bekannten Verfahren, daß die thermoplastische Klebemasse stets auf vorausbestimmte, örtlich genau begrenzte Stellen eines zu bedruckenden oder sonstig zu beschriftenden Papierblattes oder dgl. aufgebracht werden muß, so daß bei zu bedruckenden Papierblättern außer dem Satzspiegel, Anschrift usw. auch die örtlich genau begrenzten Klebestellen vor dem eigentlichen Druckvorgang festgelegt und mit thermoplastischem Klebstoff beschichtet werden müssen. Die Herstellung solcher örtlich begrenzter Klebestellen ist technisch sehr aufwendig, da für jeden Anwendungsfall sog. Beschichtungswerkzeuge, z.B. Tiefdruckzylinder, angefertigt werden müssen. Sie erfordert darüberhinaus in der Serienfertigung große Sorgfalt, damit sichergestellt ist, daß die Beschichtung der zu bedruckenden Papierblätter mit thermoplastischer Klebemasse nur an den vorgegebenen Stellen der Blätter erfolgt, um Fehlverklebungen am fertig bedruckten Papiererzeugnis und damit den Ausschuß von in Massen hergestellten Druckerzeugnissen zu verhindern. Darüberhinaus entstehen auch als Folge der örtlich begrenzten Aufbringung von thermoplastischen Klebstoffen auf zu bedruckende Papierblätter oder -bahnen auf der Auftragsseite des thermoplastischen Klebstoffes meßbare Unebenheiten gegenüber den nicht mit Klebstoffmasse beschichteten Papierflächen eines Blattes, was zu Störungen beim Durchgang durch moderne Hochleistungsdrucker, z.B. Laserprinter, führen kann.

Aufgabe der Erfindung ist es, ein Verfahren zu schaffen, das die Herstellung von zu bedruckenden Papiererzeugnissen, insbesondere von Einblattbriefen, Formularen, Formularsätzen usw. in moderner Massenfertigung vereinfacht und das dem Verwender des Papiererzeugnisses insbesondere dem Drucker, Kopierer oder Beschrifter vielseitige Möglichkeiten eines Anbringens der endgültigen Klebe- bzw. Verschlußstellen offen läßt, so daß solche Klebe- oder Verschlußstellen in individueller Anpassung an die jeweilige Bedruckung, Formatgestaltung bzw. Aufmachung des endgültigen Papiererzeugnisses festgelegt werden können.

Diese Aufgabe wird erfindungsgemäß durch das im Anspruch 1 angegebene Verfahren gelöst.

Dadurch, daß das thermoplastische Klebemittel erfindungsgemäß auf der ganzen Fläche des zu bedruckenden Papierblattes gleichmäßig und fein verteilt mit einer Beschichtung von weniger als 50 g/m² Papierfläche aufgetragen wird, und daß erst nach dem Bedrucken, Beschriften, Kopieren oder dgl. des Papierblattes die einzelnen Klebestellen vorgegeben bzw. durch Anwendung von Hitze und Druck gebildet werden können, ergeben sich vielfache Gestaltungs- und Ausbildungsmöglichkeiten für die Anordnung derartig begrenzter Klebe- bzw. Verschlußstellen insbesondere bei Einblattbriefen, Formularsätzen usw. Dies ermöglicht es, solche Verschlußstellen sowohl bei üblichem Rechteckformat als auch bei Briefen, die von diesem Format abweichen, als örtlich begrenzte Klebestellen jeweils dort anzubringen, wo dies nach der Gestaltung bzw. Bedruckung des Papiererzeugnisses insbesondere eines Einblattbriefes erwünscht ist. Hierdurch wird die Herstellung solcher Papiererzeugnisse in einer modernen Massenfertigung erheblich erleichtert, da bei der Herstellung der zu bedruckenden Papiere nicht mehr auf die dem jeweiligen Papier zugeordneten, örtlich begrenzten Klebestellen geachtet werden muß. Überraschenderweise reicht die erfindungsgemäß vorgesehene Beschichtung mit thermoplastischer Masse aus, um örtlich gezielte breite, aber auch sehr schmale, ja sogar punktförmige Klebe- bzw. Verschlußstellen herzustellen, indem nach dem Druckvorgang in an sich bekannter Weise die thermoplastische Masse nur an den örtlich begrenzten Stellen durch Erhitzung aktiviert, also plastifiziert und dann unter Anwendung entsprechender Drücke die Verklebung und damit die Verschlußstellen erzeugt werden. Daher werden zweckmäßig, entsprechend der geringen, äußerst fein verteilten Klebeschicht höhere Druckkräfte aufgebracht.

Nach einem Merkmal der Erfindung können zur Erzielung optimaler Fertigungszeiten und zur Verkürzung der Aktivierung und Verklebungszeit der thermoplastischen Klebemasse anorganische Pigmente und/oder mikrokristalline Wachse beigemischt werden, derart, daß dadurch der Schmelzpunkt der thermoplastischen Masse herabgesetzt wird. Hierdurch ist es möglich, die Aktivierungszeit zu verkürzen, wobei allerdings auch zur Verkürzung der Fertigungszeiten für die Herstellung des Verschlusses der nach dem Aktivieren erforderliche Schließdruck entsprechend groß gehalten sein muß. Als geeignete Pigmente haben sich Calciumcarbonat, Titandioxid, Bariumsulfat, Magnesiumcarbonat, Aluminiumoxid, Microtalkum, Clay, Calciumsilikate, aber auch Zellulosemehl die Senkung der Heißsiegelfähigkeit verursachende Stoffe wie Carboxylmethylzellulose, Stärke in Form von Pulver oder Korn oder verkleisterte Stärke aus Weizen, Kartoffeln, Sago, Reis, Mais und anderen Cerealien erwiesen. Geeignet sind auch oxidierte Stärken, veresterte und verätherte Stärken sowie Aldehydstärken. Die Heißsiegelfähigkeit kann auch durch Zusatz geeigneter Wachse, Öle oder Fette, z.B. Polyethylenwachse, Polyolefinwachse, Esterwachse gesenkt werden.

Vorteilhaft erfolgt die Bildung der einzelnen örtlich begrenzten Klebestellen nach dem Bedrucken, Beschriften, Kopieren oder dgl. in einer dem Drucker, Beschrifter, Kopierer oder dgl. nachgeordneten Klebestation, in welcher unter Aufwendung von Wärme der thermoplastische Klebestoff örtlich begrenzt aktiviert und unter Anwendung von vergleichsweise hohem Druck der örtlich begrenzte Verschluß des Papiererzeugnisses hergestellt wird. Beim Bedrucken der erfindungsgemäßen Papiererzeugnisse in bekannten Laserdruckern ist es von Vorteil, wenn die Schichtdicke der thermoplastischen Klebstoffschicht etwa gleich ist wie die Schichtdicke eines beim Bedrucken aufzubringenden Tonermaterials oder dgl. Weiter hat sich überraschend gezeigt, daß erfindungsgemäß beschichtete Papiere beim Bedrucken mittels Laserdruckern oder anderen mit verhältnismäßig hoher Temperatur arbeitenden Druck- oder Kopiermaschinen ohne Schwierigkeiten bearbeitet werden können, weil das bei Laserdruckern zuweilen auftretende Fädenziehen von örtlich begrenzt aufgebrachter thermoplastischer Masse beim Durchgang durch Drucker, die durch Temperatur- oder Lösemittel-Anwendung die aufzubringende Beschichtungsmasse, z.B. Toner, fixieren, vermieden wird.

Im Rahmen des erfindungsgemäßen Verfahrens können bekannte thermoplastische Klebemassen, wie beispielsweise Polyvinylacetat-Copolymerisate, Polyvinylacetat-Homopolymere, Copolymerisat auf Basis Vinylacetat-Maleinsäure-di-n-butylester und andere Verbindungen von Vinylacetat oder Copolymerisat sowie auch terpolymeres Polyvinylacetat, Vinylchlorid-Vinylacetat-Copolymere oder Polymere aus carboxylgruppenhaltigem Copolymerisat aus Vinlylidenchlorid und Acrylnitril verwendet werden.

Zur Durchführung des erfindungsgemäßen Verfahrens kann beispielsweise wie folgt vorgegangen werden:

### Beispiel 1:

Es werden
360 Teile Wasser
4 Teile Carboxylmethylzellulose
2,5 Teile Ätznatron
100 Teile Microtalkum
150 Teile Calciumcarbonat
375 Teile ACRONAL S360D®
(Acrylsäureester, Acrylnitril + Styrol)
oder
360 Teile Wasser
4 Teile Carboxylmethylzellulose
2,5 Teile Ätznatron
100 Teile Microtalkum
150 Teile Calciumcarbonat
5 Teile Calciumstearat
375 Teile ACRONAL S360D®
(Acrylsäureester, Acrylnitril + Styrol)
zu einer Beschichtemasse vermischt. Diese Beschichtemasse wird mit einem Rollrakel mit einem Beschichtegewicht von 8 g/m² Papier in trocknem Zustand gemessen - auf ein 70 g/m² Papier aufgebracht und bei 90°C getrocknet. Die vorgesehene Beschichtung kann bei 100°C und einem Druck von 5 bar äußerst schnell, beispielsweise innerhalb einer Zeit von 2 sec. einwandfrei heißversiegelt werden.

### Beispiel 2:

360 Teile Wasser
4 Teile CMC
2,5 Teile Ätznatron
100 Teile Microtalkum
150 Teile Calciumcarbonat
1900 Teile Molowilith DVB®
(Polyvinylacetat)
werden zu einer Beschichtemasse vermischt und mit einem Rollrakel werden 8 g/m² Beschichtung auf ein 70g/m² Papier aufgetragen und bei 90°C getrocknet. Das so beschichtete Papier ist versand- und bedruckfertig und kann dann in der Druckerei in gewünschter Weise bedruckt werden. Die Aktivierung und Erzeugung der örtlich begrenzten Verschlußstellen erfolgt wieder durch Heißversiegelung beispielsweise bei 100°C und einem Druck von 5 bar nach dem Bedrucken. Hierdurch kann gleichfalls in kürzester Zeit an nach dem Bedrucken angegebenen Stellen innerhalb weniger Sekunden eine einwandfreie Versiegelung und damit ein einwandfreier Verschluß beispielsweise eines Briefes erzielt werden.

Weiter hat sich gezeigt, daß mit den beispielsweise angegebenen Beschichtungen Beschriftungen und Bedruckungen im Laserprinter ohne Schwierigkeiten erfolgen können, wobei ein Ankleben thermoplastischer Masse am Vorheizsattel bzw. in der beheizten Fixierstation des Laserprinters vermieden ist.

### Beispiel 3:

Es werden:
360 Teile Wasser
4 Teile CMC
2,5 Teile Ätznatron
100 Teile Microtalkum
70 Teile Calciumcarbonat
1900 Teile Mowilith DVB®
(Polyvinylacetat)
10 Teile Ceridust 3715®
(Polyethylenwachs)
zu einer Beschichtemasse hergerichtet, wieder mit einem Rollrakel beispielsweise 8g/m² dieser Beschichtemasse auf ein 70g/m² Papier aufgebracht, und bei 90°C getrocknet. Das so beschichtete Papier ist versand- und bedruckfähig.

Nach dem Bedruckvorgang können nun bei einem so beschichteten Papier örtlich begrenzte Heißversiegelungen und damit Verschlußstellen hergestellt werden, indem beispielsweise bei 100°C und 5 bar Druck die Klebemasse aktiviert und verklebt wird.

### Beispiel 4:

Es werden:
300 Teile Wasser
3 Teile Carboxylmethylzellulose
300 Teile Vinnapas-Dispersion EP11®
(Copolymerisat aus Polyvinylacetat und Ethylen)
30 Teile Calciumstearat + Dispersion 30 %-ig
zu einer Beschichtemasse angerührt; diese Beschichtemasse wird mit einem Rollrakel mit einer Beschichtung von 2 g/m² auf ein 70 g/m² Papier aufgebracht und bei 90°C getrocknet. Das Papier ist ebenfalls versandfertig und stapelbar und kann im Nachhinein bedruckt werden. Um die örtlich begrenzten Verschlußstellen durch Heißversiegelung an dem bedruckten Erzeugnis zu bilden, bedarf es der Heißversiegelung bei 100 °C und eines Druckes von 5 bar; die örtlich begrenzten Klebestellen eines Einblattbriefes oder eines Formularsatzes oder eines anderen Papiererzeugnisses lassen sich dann in wenigen Sekunden bei dem angegebenen Beispiel nämlich in 2 sec. herstellen.

## Patentansprüche

1. Verfahren zum Verkleben von durch Bedrucken, Kopieren oder dgl. zu beschriftenden Papierblättern, wie beispielsweise Einblattbriefen, Formularblättern, Formularsätzen usw., bei dem ein thermoplastisches Klebemittel zwecks Bildung von Klebestellen auf mindestens eine Seite des zu bedruckenden Papiers aufgetragen wird und das Klebemittel nach dem Bedrucken unter Einwirkung von Wärme aktiviert und das Papierblatt unter Druckanwendung an vorgegebenen Stellen verklebt wird, **dadurch gekennzeichnet**, daß das thermoplastische Klebemittel auf der ganzen Fläche des zu bedruckenden Papierblattes gleichmäßig und fein verteilt mit einer Beschichtung von weniger als 50 g/m² aufgetragen wird und daß erst nach dem Bedrucken, Kopieren oder dgl. einzelne vorgegebene Klebestellen unter Anwendung von Hitze und Druck gebildet werden.

2. Verfahren nach Anspruch 1, **dadurch gekennzeichnet**, daß dem thermoplastischen Klebemittel vor dem Auftragen anorganische Pigmente und/oder mikrokristalline Wachse beigemischt werden.

3. Verfahren nach Anspruch 2, **dadurch gekennzeichnet**, daß als Pigmente Calciumcarbonat, Titandioxid, Bariumsulfat, Magnesiumcarbonat, Aluminiumoxid, Microtalkum, Clay, Calciumsilikate und/oder Zellulosemehl verwendet werden.

4. Verfahren nach Anspruch 2, **dadurch gekennzeichnet**, daß als kristalline Wachse Polyethylenwachse, Polyolefinwachse und/oder Esterwachse verwendet werden.

5. Verfahren nach einem der Ansprüche 1 bis 4, **dadurch gekennzeichnet**, daß die Bildung der einzelnen, örtlich begrenzten Klebestellen in einer dem Bedrucken, Kopieren oder dgl. nachgeordneten Klebestation erfolgt.

6. Verfahren nach einem der Ansprüche 1 bis 5, **dadurch gekennzeichnet**, daß die Schichtdicke der thermoplastischen Klebstoffschicht etwa gleich groß ist wie die Schichtdicke einer beim Bedrucken aufgebrachten Tonerschicht oder dgl.

7. Einblattbrief, Formularsatz oder dergleichen zur Verwendung in Laserdruckverfahren, **dadurch gekennzeichnet**, daß mindestens eine Seite des Einblattbriefes, Formularsatzes oder dergleichen eine ganzflächige, gleichmäßige Beschichtung mit einem thermoplastischen Klebemittel aufweist, wobei die Beschichtemenge weniger als 50 g/m² beträgt, und daß dem thermoplastischen Klebemittel Zusatzstoffe zur Absenkung der Heißsiegelfähigkeit beigemischt sind.

8. Einblattbrief, Formularsatz oder dergleichen gemäß Anspruch 7, **dadurch gekennzeichnet**, daß die Zusatzstoffe in Form von mikrokristallinen Wachsen, Ölen oder Fetten, Carboxymethylcellulose oder Stärke beigemischt sind.

9. Einblattbrief, Formularsatz oder dergleichen gemäß Anspruch 8, **dadurch gekennzeichnet**, daß als mikrokristalline Wachse Polyolefinwachse, insbesondere Polyethylenwachse oder Esterwachse beigemischt sind.

10. Einblattbrief, Formularsatz oder dergleichen gemäß einem der Ansprüche 8 oder 9, **dadurch gekennzeichnet**, daß Stärke in Form von Pulver oder Korn, hergestellt auf der Basis von Weizen, Kartoffeln, Reis, Mais oder ähnlichen Cerealien, beigemischt sind.

11. Einblattbrief, Formularsatz oder dergleichen gemäß einem der Ansprüche 7 bis 10, **dadurch gekennzeichnet**, daß dem thermoplastischen Klebemittel ferner anorganische Pigmente beigemischt sind.

12. Einblattbrief, Formularsatz oder dergleichen gemäß Anspruch 11, **dadurch gekennzeichnet**, daß als anorganische Pigmente Calciumcarbonat, Titandioxid, Bariumsulfat, Magnesiumcarbonat, Aluminiumoxid, Mikrotalkum, Clay und/oder Calciumsilikate beigemischt sind.

13. Einblattbrief, Formularsatz oder dergleichen gemäß einem der Ansprüche 7 bis 12, **dadurch gekennzeichnet**, daß die Schichtdicke der thermoplastischen Klebstoffschicht etwa gleich groß ist wie die Schichtdicke einer beim Bedrucken aufgebrachten Tonerschicht oder dergleichen.

## Claims

1. Process for gluing sheets of paper which are to carry writing in the form of printing, copying or the like such as single-sheet letters or forms or sets of forms, in which a thermoplastic adhesive is applied to at least one side of the paper for printing with the purpose of forming gluing regions, and the adhesive is activated after printing under the influence of heat and the sheet of paper is glued at predetermined points with the use of pressure, characterized in that the thermoplastic adhesive is applied evenly over the whole surface of the sheet of paper for printing and thinly spread with a coating of less than 50 grams per square metre, and that only after the printing, copying or like process individual prescribed gluing regions are formed with the use of heat and pressure.

2. Process according to Claim 1, characterized in that inorganic pigments or microcrystalline waxes are added to the thermoplastic adhesive before application.

3. Process according to Claim 2, characterized in that calcium carbonate, titanium dioxide, barium sulphate, magnesium carbonate, aluminium oxide, microtalcum, clay, calcium silicates and/or cellulose powder are used as pigments.

4. Process according to Claim 2, characterized in that the crystalline waxes used are polyethylene waxes, polyolefin waxes, and/or ester waxes.

5. Process according to one of Claims 1 to 4, characterized in that the forming of the individual gluing regions at defined locations takes place in a gluing station which is placed after the printing, copying or the like.

6. Process according to one of Claims 1 to 5, characterized in that the thickness of the coating of thermoplastic adhesive is approximately the same as the thickness of the layer of toner or the like applied during printing.

7. Single-sheet letter, set of forms or the like for use in laser printing processes, characterized in that at least one side of the single-sheet letter, set of forms or the like has an even coating of a thermoplastic adhesive over its whole surface, the coating quantity amounting to less than 50 grams per square metre, and that additional substances are mixed with the thermoplastic adhesive to lower its heat-sealing capacity.

8. Single-sheet letter, set of forms or the like according to Claim 7, characterized in that the additional substances added take the form of microcrystalline waxes, oils or fats, carboxy methyl cellulose or starch.

9. Single-sheet letter, set of forms or the like according to Claim 8, characterized in that the microcrystalline waxes added are polyolefin waxes, especially polyethylene waxes or ester waxes.

10. Single-sheet letter, set of forms or the like according to one of Claims 8 or 9, characterized in that starch in powder or granular form is added, produced on the basis of wheat, potatoes, rice, maize or similar cereals.

11. Single-sheet letter, set of forms or the like according to one of Claims 7 to 10, characterized in that inorganic pigments are also added to the thermoplastic adhesive.

12. Single-sheet letter, set of forms or the like according to Claim 11, characterized in that examples of inorganic pigments added are calcium carbonate, titanium dioxide, barium sulphate, magnesium carbonate, aluminium oxide, microtalcum, clay and/or calcium silicates.

13. Single-sheet letter, set of forms or the like according to one of Claims 7 to 12, characterized in that the thickness of the coating of thermoplastic adhesive is approximately the same as the thickness of the layer of toner or the like applied during printing.

## Revendications

1. Procédé de collage de feuilles de papier devant porter des inscriptions par impression, copie ou similaire, par exemple feuillets-lettres, formulaires, liasses dé formulaires, etc., dans lequel on dépose une colle thermoplastique en vue de la formation d'emplacements de collage sur au moins une face du papier à imprimer et on active la colle après l'impression, sous l'effet de chaleur, et on colle le papier aux emplacements prédéteminés par application d'une pression, caractérisé en ce que la colle thermoplastique est distribuée en une couche régulière et fine de moins de 50 g/m² sur toute la surface de la feuille de papier à imprimer et en ce que les différents emplacements de collage prédéterminés ne sont formés qu'après l'impression, la copie ou similaire, par application de chaleur et de pression.

2. Procédé selon la revendication 1, caractérisé en ce qu'on ajoute à la colle thermoplastique, avant son application, des pigments inorganiques et/ou des cires microcristallines.

3. Procédé selon la revendication 2, caractérisé en ce qu'on utilise comme pigments du carbonate de calcium, du dioxyde de titane, du sulfate de baryum, du carbonate de magnésium, de l'oxyde d'aluminium, du talc microcristallin, de l'argile, des silicates du calcium et/ou de la poudre de cellulose.

4. Procédé selon la revendication 2, caractérisé en ce que l'on utilise comme cires cristallines des cires de polyéthylène, des cires de polyoléfines et/ou des cires d'esters.

5. Procédé selon l'une quelconque des revendications 1 à 4, caractérisé en ce que les différents emplacements de collage localement délimités sont formés dans un poste de collage faisant suite à l'impression, la copie ou similaire.

6. Procédé selon l'une quelconque des revendications 1 à 5, caractérisé en ce que l'épaisseur de la couche de colle thermoplastique est à peu près égale à l'épaisseur de la couche de toner ou similaire appliquée lors de l'impression.

7. Feuillet-lettre, liasse de formulaires ou similaire à utiliser dans un procédé d'impression au laser, caractérisé en ce qu'au moins une face du feuillet-lettre, de la liasse de formulaires ou similaire présente un revêtement régulier, sur toute sa surface, en une colle thermoplastique, la quantité de la couche étant inférieure à 50 g/m² et en ce qu'on ajoute à la colle thermoplastique des additifs pour en abaisser la thermosoudabilité.

8. Feuillet-lettre, liasse de formulaires ou similaire selon la revendication 7, caractérisé en ce que les additifs ajoutés se présentent sous la forme de cires, d'huiles ou de graisses microcristallines, de carboxyméthylcellulose ou d'amidon.

9. Feuillet-lettre, liasse de formulaires ou similaire selon la revendication 8, caractérisé en ce qu'on ajoute en guise de cires microcristallines des cires de polyoléfines, notamment des cires de polyéthylène ou des cires d'esters.

10. Feuillet-lettre, liasse de formulaires ou similaire selon l'une des revendications 8 ou 9, caractérisé en ce qu'on ajoute de l'amidon pulvérulent ou granulaire, produit à partir de froment, de pommes de terre, de riz, de maïs ou céréales similaires.

11. Feuillet-lettre, liasse de formulaires ou similaire selon l'une des revendications 7 à 10, caractérisé en ce que des pigments inorganiques sont en outre ajoutés à la colle thermoplastique.

12. Feuillet-lettre, liasse de formulaires ou similaire selon la revendication 11, caractérisé en ce qu'on ajoute en guise de pigments inorganiques du carbonate de calcium, du dioxyde de titane, du sulfate de baryum, du carbonate de magnésium, de l'oxyde d'aluminium, du talc microcristallin, de l'argile et/ou des silicates de calcium.

13. Feuillet-lettre, liasse de formulaires ou similaire selon l'une des revendications 7 à 12, caractérisé en ce que l'épaisseur de la couche de colle thermoplastique est à peu près égale à l'épaisseur de la couche de toner ou similaire déposée lors de l'impression.
